(19)

Europäisches
Patentamt
European
Patent Office
Office européen
des brevets

(11)     **EP 3 128 441 B1**

(12)                            **EUROPEAN PATENT SPECIFICATION**

(45) Date of publication and mention
of the grant of the patent:
**10.10.2018   Bulletin 2018/41**

(51) Int Cl.:
***G06F 17/30*** *(2006.01)*

(21) Application number: **15290199.7**

(22) Date of filing: **03.08.2015**

(54) **HANDLING DATA REQUESTS**

HANDHABUNG VON DATENANFRAGEN

GESTIONS DE DEMANDES DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.02.2017   Bulletin 2017/06**

(60) Divisional application:
**18175669.3**

(73) Proprietor: **Amadeus S.A.S.
06410 Biot (FR)**

(72) Inventor: **Legrand, Guillaume
Waltham, MA 2453 (US)**

(74) Representative: **Samson & Partner Patentanwälte
mbB
Widenmayerstraße 6
80538 München (DE)**

(56) References cited:
**WO-A1-99/22315     US-A1- 2009 228 446**

- **JUNGHOO CHO ET AL: "Synchronizing a
database to improve freshness", PROCEEDINGS
OF THE 2000 ACM SIGMOD INTERNATIONAL
CONFERENCE ON MANAGEMENT OF DATA,
MAY 16-18, 2000, DALLAS, TEXAS, USA; [ISSAC.
PROCEEDINGS OF THE INTERNATIONAL
SYMPOSIUM ON SYMBOLIC AND ALGEBRAIC
COM , vol. 29, no. 2 16 May 2000 (2000-05-16),
pages 117-128, XP002449369, ISBN:
978-1-58113-218-2 Retrieved from the Internet:
URL:http://dblp.uni-trier.de**
- **Deborah Steiner ET AL: "Oracle Web Cache.
Administration Deployment Guide Release,
1.0.2.3", , 2 March 2001 (2001-03-02), pages 1-198,
XP055246645, Retrieved from the Internet:
URL:https://docs.oracle.com/cd/A97336_01/c
ache.102/a86722.pdf [retrieved on 2016-02-01]**

## Description

The present invention generally relates to database technology. More specifically, it is directed to a mechanism for handling incoming data requests considering the accuracy of prepared results to be returned to a data request.

BACKGROUND

A common problem in database technology is to ensure short response times to database queries or requests which require complex, long and resource-intensive processing, e.g. due to large volumes of data. For example, such computing-power consuming processing has to be performed in response to so-called "open queries" which contain only little input information (e.g. only one or two parameters out of a dozen possible parameters are specified and/or the specified value ranges of the parameters are broad) and, consequently, lead to a large number of results in general. Possibilities to speed up data processing by increasing hardware performance are limited. Thus, attention is drawn to improving the mechanisms underlying the complex, long and resource-intensive processing in order to respond to such queries.

One general approach to shorten response times is to prepare results to be returned in response to expected requests (e.g. by pre-computing or pre-collecting such results) and to maintain the corresponding query results in a pool of prepared results. Requests are then actually not processed and responses on the basis of the large original data basis, but are directed to the pool of prepared results.

Another issue, however, which comes along with such result preparing approaches, is to keep the prepared results up-to-date in order to ensure that prepared results returned in response to data requests correctly reflect the outcome of a complex, long and resource-intensive processing. In case the underlying original data basis changes, the prepared results get outdated and answering requests on the basis of the pool of prepared results would deliver incorrect prepared results. Thus, update strategies are employed to keep the pool of prepared results up-to-date.

Various relatively simple update strategies are known in the prior art like, for example, re-computing the entire domain of prepared results frequently, establishing and maintaining re-computation schedules manually and re-computing prepared results when they are getting too old.

Somewhat more sophisticated update strategies have been developed, as e.g. described by WO 01/33472 and WO 02/25557.

WO 01/33472 concerns an availability system used in a travel planning system. The system includes a cache having entries of availability information regarding airline seats. A cache manager manages entry information in the cache in order to keep information in the cache correct, current, complete or otherwise as useful as possible. In response to a query directed to the cache, the cache manager determines if a stored answer is stale and, if this is the case, sends an availability query to a source of availability information. Cache entries to be modified are obtained by asynchronous notifications from external systems and determined by a deterministic, predictive or statistical model.

Similarly, WO 02/25557 pertains to an information retrieval system wherein information received from information sources is cached for future use, such as for future client requests. Proactive queries can be generated to populate a cache and/or to update presently cached information. In an airline information system, proactive queries are ordered on the basis of statistics or predictive indications such a nearness of departure time, the age of cached data, remaining seats in an aircraft, holidays or special events or equipment type. In addition, updates are received by external notifications from airlines such as AVS messages.

Moreover, WO 99/22315 describes a mechanism for automatically refreshing documents in a cache by using a statistics-based probabilistic model. For each document, the cache determines a probability $Psi(t)$ that a cached object i is stale at a particular time t (i.e. the server has changed that object) and a probability $Pri(h)$ that object i is requested by a user by request time h. The cache refreshes those objects with the highest product $Pi = Psi(t) \times Pri(h)$, i.e. the probability that an outdated object is returned to the user with the next request. To maintain these probability values, the cache maintains and tracks historical statistics for the cached objects such as an estimated mean interval between server updates EUI. EUI of an object is e.g. updated when the object itself is updated by the server or the object is not updated after its estimated mean refresh time has elapsed.

US2009/0204753 A1 relates to refreshing a cache based on query responses provided by a searching system in response to queries. A cache entry is provided for each unique query if space is available in the cache. A temperature value is assigned to each cache entry based on a frequency of occurrence of the corresponding query. An age value is assigned to each cache entry based on a time of last refresh or creation of the corresponding query response. The age of the cache entries is periodically updated and the temperature of a cache entry is updated when a corresponding query occurs. If system resources are available, the query response of a cache entry is refreshed based on the temperature and age of the cache entry. Refreshing is limited if resources are unavailable.

The article "Synchronizing a database to Improve Freshness" by J. Cho et al. studies possibilities to refresh a local copy of an autonomous data source to maintain the copy up-to-date. Inter alia, the Poisson process is described as an approach to model the probabilistic evolution of an element.

SUMMARY OF THE INVENTION

The present invention is defined by the independent claims.

According to one aspect, a method for handling data requests directed to a database environment is provided. The database environment has a least one first platform providing original results to be stored in a second platform as prepared results. The second platform maintains a pool of the prepared results having been prepared via the first platform in order to be returned to data requests. The database environment further has a control unit for processing the data requests directed to the database environment. Each prepared result maintained in the pool of the second platform is associated with an update indicator being a measure that the associated prepared result kept in the pool of the second platform is to be updated. The control unit receives a data request. The control unit determines at least one prepared result corresponding to the data request. The control units compares the update indicator of the determined prepared result corresponding to the data request with a threshold value, wherein the threshold value is dynamically adapted depending on the load of the first platform. If the comparison indicates a requirement to update the prepared result, the control unit retrieves an updated version of the at least one prepared result from the first platform. The control unit updates the prepared result in the pool of the second platform and the associated update indicator based on the updated version of the at least one prepared result. The control unit returns the updated version of the at least one result. On the other hand, if the comparison does not indicate a requirement to update the at least one prepared result, the control unit returns the at least one determined prepared result. The update indicator is defined by

$$\frac{(1-acc)}{c} \cdot t,$$

wherein acc is a probability that the associated prepared result is valid, t an age of the associated prepared result, and c a measure for computation resources of the first platform needed to prepare the updated version of the associated prepared result. In this way, the accuracy of the prepared results (i.e. the prepared results are still in line with the original response data) is enhanced in the long term, as will be explained in detail below.

According to a second aspect, a control unit being arranged accordingly is provided.

According to a third aspect, a computer program to be executed by a control unit and enabling the control unit with respective functionality is provided.

Further aspects are defined by the dependent claims.

BRIEF DESCRIPTION OF THE FIGURES

The subsequent description of embodiments is based on the accompanying set of figures in which similar reference numerals refer to similar elements and messages and in which:

FIG. 1 shows a high-level schematic overview of the system architecture as described herein;

FIGS. 2A and 2B depict a high-level message flow for processing data requests by utilizing update indicators;

FIG. 3 represents an effect of decreasing validity probability of prepared results;

FIG. 4 presents an exemplary system architecture of the database environment;

FIGS. 5A and 5B depict a more specific message flow example for processing data requests by utilizing update indicators;

FIG. 6A and 6B depict another message flow example for processing data requests by utilizing update indicators;

FIG. 7 visualizes a feedback loop between the first platform and the control unit in order to dynamically adapt the threshold value;

FIG. 8 shows an example for an inner structure of a control unit.

DETAILED DESCRIPTION

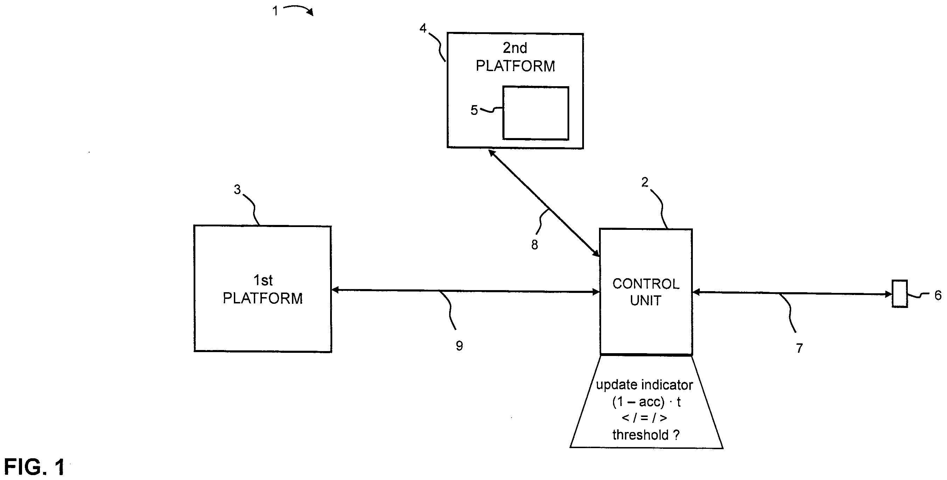

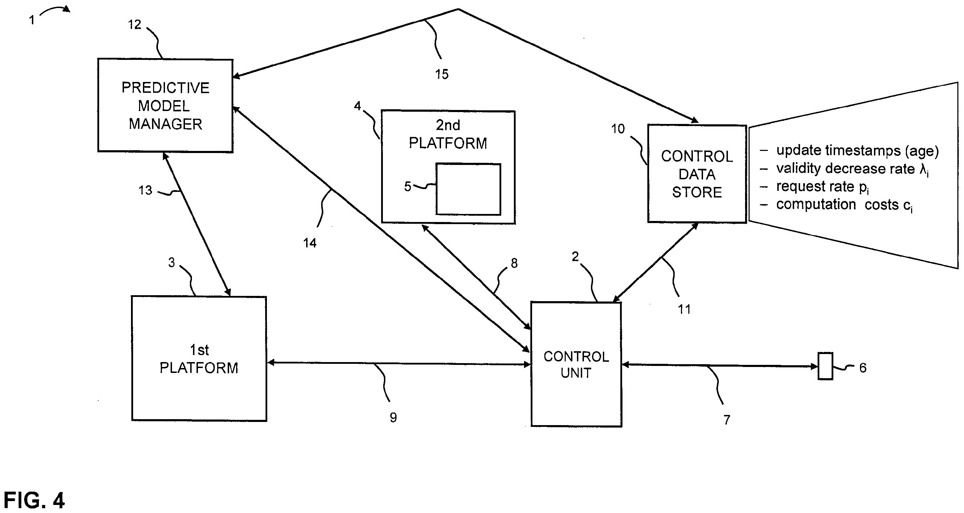

Before turning to the description of the embodiments on the basis of FIG. 4 to 8, a few more general aspects are elaborated first with reference to FIG. 1 to 3.

As already outlined at the outset, the methodologies described herein relate to database systems which offer prepared results to clients requesting data from a database system. The technical aim of preparing results before they are requested from clients is generally to decrease response times for responding to such data requests. Hereinafter, the term "prepared" is used to relate any sort of pre-processing, pre-computation and pre-collection of results in an asynchronous manner, i.e. independently from and prior to a data request from a client. Examples for a preparation of results are Internet crawlers collecting or copying the content of Internet web servers as well as results generated in response to earlier data requests that are maintained in a cache for fast retrieval, but also complex and time-intensive computations of search results on the basis of underlying data as it is e.g. described for priced travel recommendations by PCT/EP2013/002390 and EP 2541473 A1. The term "database" is meant to encompass any types of structured information storage system such as standard stand-alone databases like SQL server or Oracle databases as well as complex, distributed and/or proprietary storage systems, relational databases including database management systems or object-oriented database systems and the like. The term "data request" is used herein as a general term for any types of inquiries to a database system in order to retrieve data including any type of information retrieval requests such as transactional queries, requests for batch computations, SQL queries and other forms.

FIG. 1 illustrates such a database environment 1 at an abstract level. Original data, hereinafter also referred to as original results, are provided by a first platform 3. In general, the first platform 3 is either an original data source itself, such as an inventory database or a database maintaining any kind of original and generally valid results, or accesses one or more original data sources in order to prepare original results. Examples of the latter kind are a search engine accessing Internet websites and a computation platform computing priced travel recommendations based on fares stored in a fare database. If the first platform 3 generates/computes/collects the original results by accessing other/further original data sources in order to prepare original results, the first platform 3 provides results which generally accurately reflect the current content of the original response data . More than one first platform 3 can be present in the database environment 1.

The database environment 1 further includes a second platform 4 which maintains a pool 5 of results which have been prepared via the first platform 3. The second platform 4 is e.g. a cache which caches results having been retrieved via the first platform 3, or the second platform 4 is e.g. a server holding a repository of the content of crawled websites, or the second platform 4 is e.g. a search platform maintaining pre-computed priced travel recommendations, as described by WO 2014/026753 A1.

In general, the first platform 3 providing original response data and the second platform 4 maintaining the pool 5 of prepared results differ from each other in technical terms as follows: The second platform 4, due to the preparation of the results, provides a cheaper (in terms of computation costs) and/or faster access to the results compared to the first platform 3. This relation between the first platform 3 and the second platform 4 can also be expressed the other way around, i.e. the first platform 3 generally responds more slowly and responses from the first platform 3 involve higher computation costs than responses from the second platform 4 because the first platform 3 still has to prepare the results (e.g. retrieve the requested content from the original Internet website, or compute the requested priced travel recommendations on the basis of fares kept in a fare database). As the computation resources of the first platform 3 are limited, the number of accesses to the first platform 3 should be kept within a certain limit. For example, CPU consumption or memory load of the first platform 3 must not exceed a given limit. This constraint may be translated into a limit of the number of accesses to the first platform per time unit (e.g. 10 accesses per second). For these reasons, the first platform 3 is not solicited each time in order to respond to data requests. Rather, responses are generally formed by utilizing the prepared results stored in the pool 5 of the second platform 4. In this way, the second platform 4 acts as a shield in front of the first platform 3, thereby reducing the load on the (computationally expensive) first platform 3.

On the other hand, however, the prepared results stored in the pool of the second platform 4 are not necessarily perfectly synchronized with the original results provided by the first platform 3. In general, the prepared results of the second platform 4 represent older versions of original result being provided by the first platform 3 and the respective version of the original result provided by the first platform 3 might have changed since the last update of the corresponding prepared result maintained in the second platform 4. Furthermore, the second platform 4 does not necessarily store prepared results corresponding to all existing original results, i.e. prepared results might be missing in the second platform 4. Prepared results stored in the pool 5 of the second platform 4 which correctly reflect their corresponding result provided by the first platform are hereinafter referred to as valid prepared results or as accurate prepared results, while outdated prepared results stored in the pool 5 of the second platform 4 are referred to as invalid prepared results or inaccurate prepared results.

Thus, the technical problem arises to maximize the accuracy and validity of the prepared results stored in the pool 5 of the second platform 4 and the accuracy and validity of prepared results returned to inquiring clients, respectively, i.e. to maintain prepared results in the second platform 4 that are consistent with the original response data provided by the first platform 3 as much as possible, in order to respond to data request with a high portion of valid prepared results.

The database environment 1 is further coupled to at least one, but generally a plurality of clients 6. Clients 6 such as applications on user terminals retrieve results from the database environment 1 by directing data requests to the database environment 1 via an interface 7. The technical characteristics of the interface 7 depend on the particular implementation of the database environment 1. For example, the interface 7 encompasses wireless communication including 2G/3G/4G (including packet-oriented mobile data exchange as well as SMS) and/or WiFi communication in the case the client 6 is situated on a mobile communications device. Alternatively or in addition, the interface 7 features wired communication using standard network protocols employed in local area networks and/or wide area networks including the Internet such Ethernet, TCP/IP, SMTP with POP3 or IMAP, HTTP, webservice-related protocols such as SOAP, etc.

A data request transmitted from a client 6 via interface 7 includes one or more retrieval criteria constraining the request. For example, if the data request is an Internet search request, the data request might carry a search string, search text or search phrase as search criteria. A further search criterion may be the language of websites to be searched or an indication of a point of time of the first availability of the requested search string, search text or search phrase. According to another example, the data request is a database request for a product or service offered by a service provider platform such as an Internet book store or a travel provider. In that case, the data request might include e.g. an upper price limit or a price range for the service or product and desired characteristics of the product/service such as book title, travel origin and destination, etc.

Data requests issued by a client 6 are received by a further entity of the database environment 1, the control unit 2 (FIG. 1). In general, the control unit 2 processes incoming data requests in order to device whether response results are retrieved from the second platform 4 and/or the first platform 3. To this end, the control unit functions as an intermediate unit controlling the data flow within the database environment 1 and the results to be returned to the client 6.

Basically, controlling the data flow by the control unit 2 takes into account the two following aspects: On the one hand, as already explained above, retrieving prepared results fulfilling the request criteria included in a data request from the pool 5 of the second platform 4 has the advantage of a faster response time (compared to generating the results by the first platform 3) and relieves the first platform 3 from potential overloads. On the other hand, however, serving a data request by retrieving original results provided by the first platform 3 allows to update the respective prepared results maintained in the pool 5 of the second platform 4. Thus, a portion of results to be returned in response a data requests can be intentionally retrieved from the first platform 3, although corresponding prepared results are available in the second platform 4. These results are thus newly prepared by the first platform 3 and returned to the requesting client 6 and stored in the pool 5 of the second platform 4 thereby updating the corresponding prepared results.

The technical problem is then to decide which portions of the data requests being transmitted from the clients 6 to the control unit 2 are to be responded on the basis of the pool 5 of the second platform 4 and which portions of the data requests are to be responded on the basis of the first platform 3 in order to update the prepared results maintained in the pool 5 of the second platform 4.

To this end, the control unit 2 utilizes an update indicator which is associated with each prepared result maintained in the pool 5 of the second platform 4. In general, the update indicator is a measure whether or not the associated prepared result kept in the pool 5 of the second platform 4 needs to be updated. The update indicator is defined by $(1 - acc) \cdot t$ (cf. FIG. 1), wherein acc is a probability that the associated prepared result is valid and t is an age of the associated prepared result. Before turning to the message sequences involved in the processing of and responding to a data request, the nature of the update indicator is elaborated in more detail first.

A given prepared result i kept in the pool 5 of the second platform 4 can be specified by the following parameters:

- The age $t_i$ of the prepared result i denotes the time since the first preparation or the last update (whichever occurred last) of the prepared result i via the first platform 3. The age $t_i$ can be calculated dynamically at a given point of time by computing the time interval since the last preparation of the prepared result i (current time minus time of last preparation/update). To this end, the timestamp of the most recent preparation of the prepared result is stored in order to compute the age $t_i$ of the prepared result i when necessary.

- The probability $acc_i$ that the prepared result i is valid. This probability can be predicted by a probabilistic model modeling the validity behavior of prepared results. An example of such a model is based on a validity rate of a prepared result i which is described next.

- The validity rate $\lambda_i$ of the prepared result i is an indicator of how frequently the result i prepared by the first platform 3 changes and thus how fast the prepared result i stored in the pool 5 of the second platform 4 becomes invalid due to changes of the result i provided by the first platform 3 (e.g. due to changes of the data kept by the first platform 3 or by changes in data kept by other data sources on the basis of which the first platform 3 computes the result i).

This validity rate $\lambda_i$ of a given prepared result i is, for example, statistically derived from the occurrence and the outcomes of past preparations and updates and comparisons of the updated prepared result i with its previous state or values in order to determine whether the prepared result i with age $t_i$ was still valid (its state or value is not changed by the update) or whether the prepared result i with age $t_i$ was invalid (its state or value is changed by the update). For example, it has been determined that a particular prepared result i has a validity rate $\lambda_i$ of 10% per hour meaning that the probability of i being valid decreases by 10% every hour. At the time of an update of the prepared result i, i is generally 100% valid. After one hour, i is valid with a probability of 90%. After two hours the validity of i is 81% (=90% decreased by another 10%). After three hours, i's probable validity is at 72.9%, and so on.

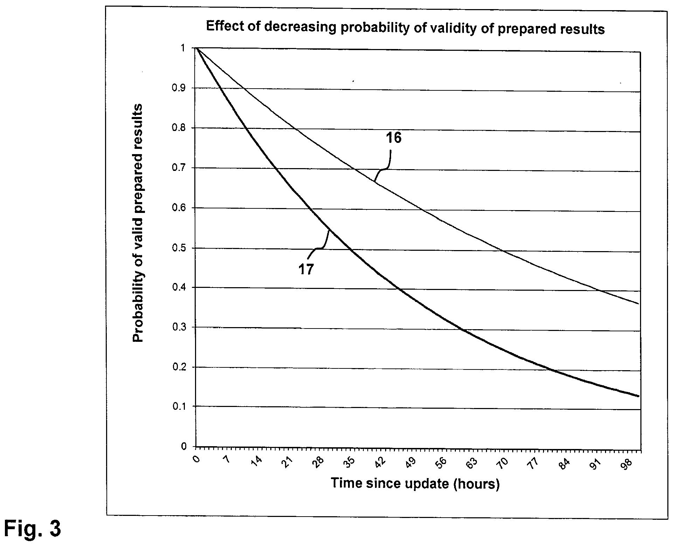

- As mentioned above, the validity rate $\lambda_i$ can be employed to provide an estimate of the probability for a prepared result to stay valid after a given time P(unchanged after t) = $e^{-\lambda_i t}$ which, in some embodiments, is considered to be the probability of a prepared result being valid or, in other words, not being outdated $acc_i = e^{-\lambda_i t_i}$. Two exemplary functions of this probable accuracy decreasing over time are depicted by FIG. 3. Function 16 represents a prepared result which potentially remains more accurate (or, more correctly, stays at a higher probability of being valid over time) than another prepared result associated with function 17. For example, the prepared result represented by function 16 has 70% probability of being still valid at 35 hours after its last re-computation, while the other prepared result characterized by function 17 is only valid up to about 50% at 35 hours after its latest re-computation. Functions 16 and 17 may also represent whole sets of prepared results and then indicate proportions of the sets of prepared results likely being valid at a time passed since the last update of the set.

- The popularity $p_i$ of the prepared result i is an average access frequency to this prepared result by the clients 7 via interface 7. Some embodiments aim at achieving a better accuracy for these prepared results which are more often requested by the clients 6 than other prepared results.

- The update cost $c_i$ relates to computation resources (such as the amount of CPU time, but also encompassing e.g. network resources required e.g. to collect original response data from other sources as mentioned above) of the first source to update the prepared result i. In some embodiments, indications of $c_i$ for different prepared results are available (e.g. from previous updates). In this case, the update cost parameter can be used to favor updating prepared results requiring less computation resources than other prepared results in order to update more prepared results. Otherwise, an assumption can be made that all prepared results have the same update costs. In any case, in some embodiments, the update cost parameter is used to limit the number of updates per time unit to the amount of computing resources available at the first platform 3, i.e. $\sum_i$ updated $c_i \leq$ Resources for each unit of time.

With these parameters, the validity probability of the prepared results stored in the pool 5 of the second platform 4 can be defined as follows:
The validity probability of all prepared results kept in the pool 5 of the second platform 4 can be considered as the mean validity, also referred to as "global accuracy", which is defined by

$$\text{Global Accuracy} = \frac{1}{N} \sum_{i \in pool} acc_i$$

with N being the number of prepared results stored in the pool 5 of the second platform 4.

Now introducing the above-mentioned exemplary probabilistic model based on the validity rate $\lambda_i$, the global accuracy is given by:

$$\text{Global Accuracy} = \frac{1}{N} \sum_{i \in pool} e^{-\lambda_i t_i}$$

The validity probability of the prepared results in the pool 5 of the second platform 4 from the perspective of the clients 6 (also referred to as "user accuracy") is then defined in that each validity probability value is weighted by the popularity of the respective prepared result. Thus, the proportion of probably accurate client accesses to the prepared results as opposed to the expected proportion of accurate prepared results is:

$$\text{User Accuracy} = \sum_{i \in pool} \frac{p_i}{p_{tot}} \, acc_i = \sum_{i \in pool} \frac{p_i}{p_{tot}} \, e^{-\lambda_i t_i}$$

wherein ptot is defined as the sum of all $p_i$.

The update indicator utilized by the control unit 2 to decide whether to return prepared results maintained in the pool 5 of the second platform 4 or whether to retrieve updated prepared results from the first platform 3 in order to both, return the updated results to the requesting client 6 as well as update the respective prepared results in the pool 5 of the second platform 4 thereby increasing the validity of the prepared results in the second platform 4 is formed by these parameters assigned to each of the prepared results in the second platform 4. In the most basic form, the update indicator described herein is given by $(1 - acc) \cdot t$, for a particular prepared result i by $(1 - acc_i) \cdot t_i$. Refined definitions based on this basic form are utilized, such as $\frac{(1-acc) \cdot t}{c}$, or in some embodiments, $\frac{p \cdot (1-acc) \cdot t}{c}$. These variations of the update indicators and their technical significance are explained in more detail further below.

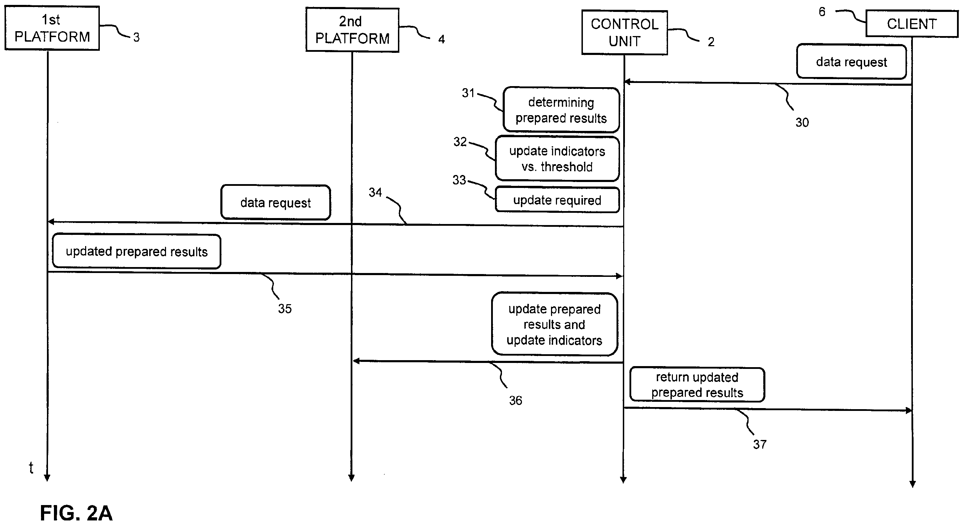

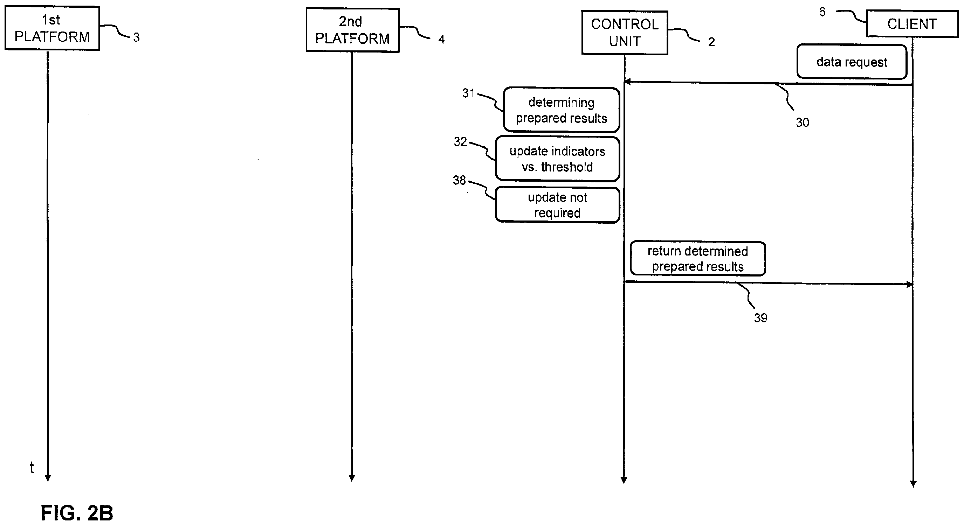

Irrespective which of the aforementioned definitions of the update indicator is utilized, the control unit 2 employs the update indicator as follows (see FIG. 2A and FIG. 2B).

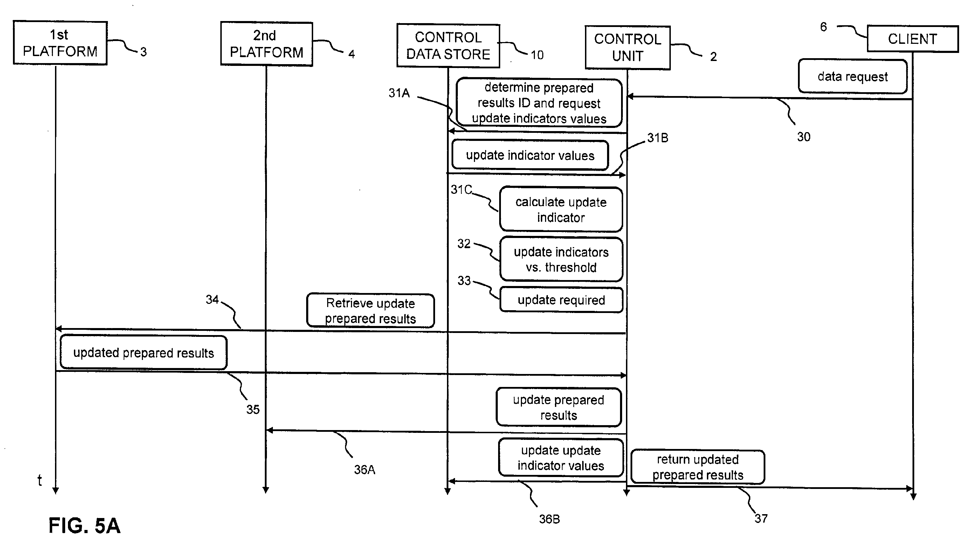

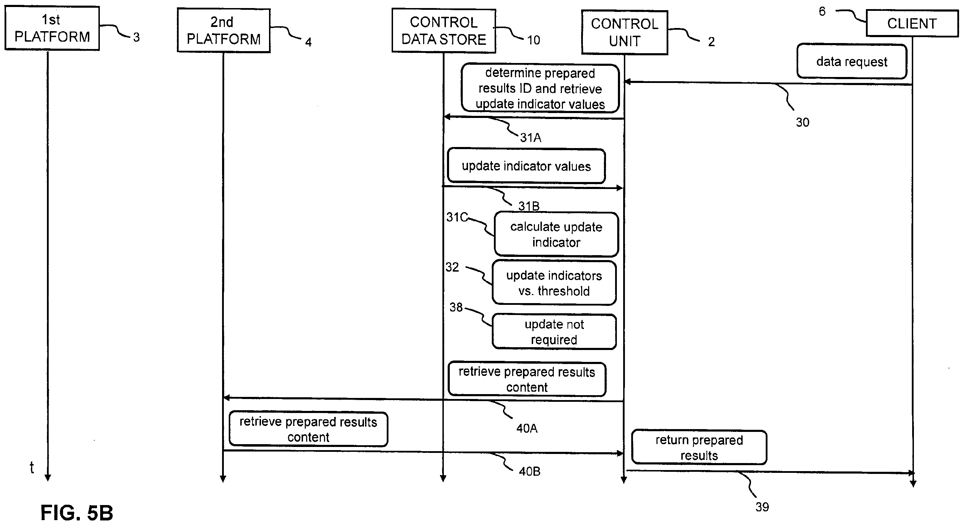

The control unit 2 receives a data request 30 from a client 6. Then, the control unit 2 determines at least one prepared result corresponding to the data request 30 (activity 31). Thus, the control unit 2 processes the data request 30, determines the data retrieval criteria included in the data request 30 (examples have already been given above) and identifies a number of prepared results which fulfill the data retrieval criteria. The specific manner how these prepared results fulfilling the data retrieval criteria are identified by the control unit 2 depends on the architecture of the database environment 1 (a particular example is given further below with reference to FIGS. 4 and 5). For example, in the case of the data request 30 being an SQL query, the control unit 2 determines the query parameters indicated the SQL query and retrieves identification information identifying prepared results (e.g. primary key values) fulfilling the query parameters of the SQL query from the second platform 4 or another module existing within the database environment 1 for that purpose.

This determination of prepared results fulfilling data retrieval criteria of the data request 30 does not necessarily include a retrieval of the content of the prepared results, yet. Rather, it is sufficient to identify these prepared results e.g. on unique identifiers such as their primary key values. In some embodiments, however, activity 31 already encompasses retrieval of the content of the prepared results fulfilling data retrieval criteria of the data request 30 from the second platform 4.

Further on, the control unit 2 compares the update indicators of the determined prepared results with a threshold value (activity 32 in FIG. 2A and FIG. 2B). At a more detailed level, this activity 32 involves a determination of the update indicator values of each of the determined prepared result. To this end, the control unit 2 e.g. retrieves respective control data such as the timestamps of the last update of the determined prepared results e.g. from a control database, calculates the ages t of the determined prepared results, retrieves the validity rates being associated with the determined prepared results, calculates the validity probability acc of the determined prepared results and then computes $(1 - acc) \cdot t$ for each of the determined prepared results. The computed values for the update indicator of the determined results are then compared to the threshold value.

The threshold value controls the amount of prepared results which are updated via the first platform 3 in response to receiving data requests 30 and the complimentary amount of prepared results which are not updated in response to receiving data requests 30, but returned to the client 6 from the pool 5 of the second platform 4.

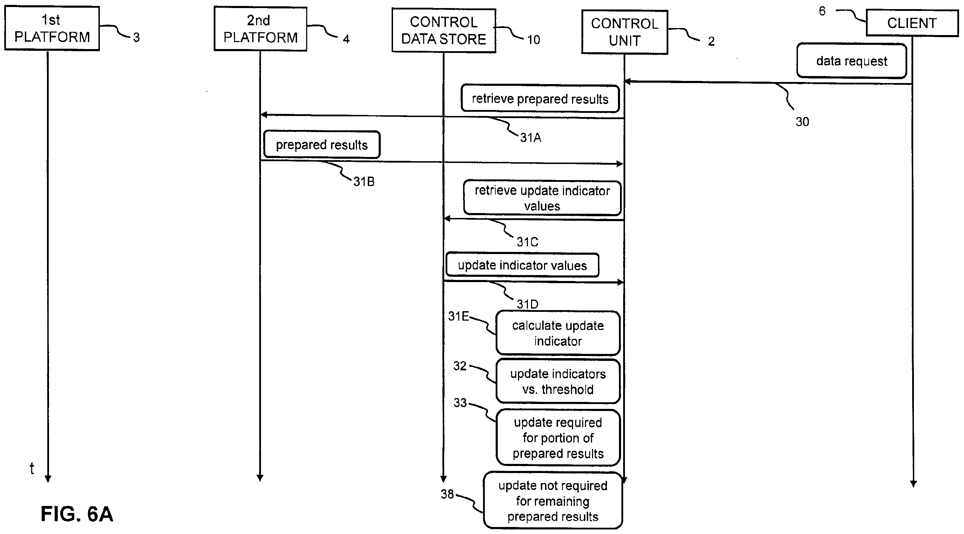

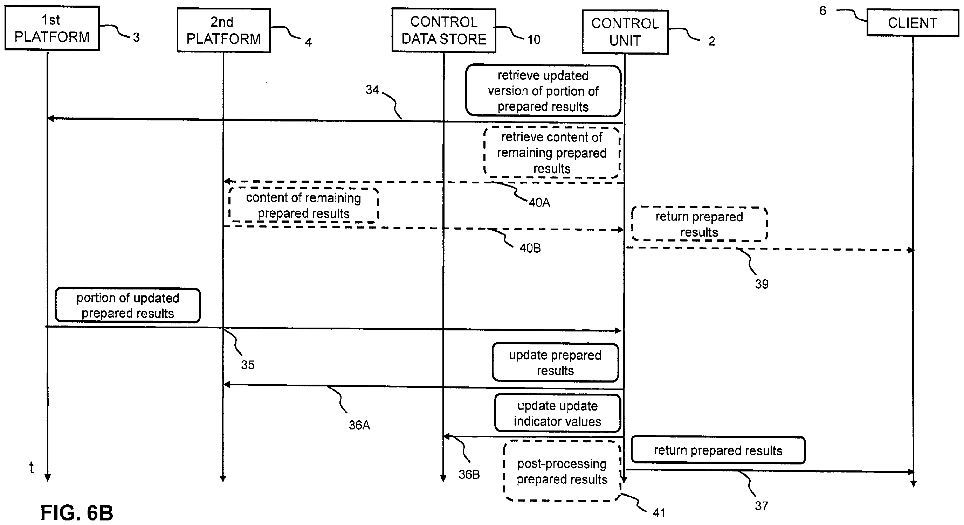

The comparison either indicates a need to update the respective prepared result if the update indicator value exceeds the threshold or the comparison indicates that the respective prepared result does not need to be updated if the update indicator value does not exceed the threshold (for reasons of simplicity, we here assume that the comparison yields the same indications for all of the determined prepared results - in practice, the comparison may also indicate that a portion of the determined prepared results should be updated and the remaining portion of the determined prepared results do not need to be updated; this situation is explained further below with reference to FIGS. 6A and 6B and is also applicable to any other examples described herein).

In the case the comparison indicates a requirement to update the prepared results (box 33 in FIG. 2A), the control unit 2 retrieves updated versions of the determined prepared results from the first platform 3 (e.g. by relaying the data request to the first platform 3) (message 34 in FIG. 2A). The first platform 3 prepares the updated versions of the prepared results and returns these updated versions of the prepared results to the control unit 2. The control unit 2 receives the updated versions of the prepared results from the first platform 3 by message 35. The control unit 2 then updates the determined prepared search result in the pool 5 of the second platform 4 (activity 36 in FIG. 2A). In addition, the control unit 2 also updates the update indicator values associated with the determined prepared results (also activity 36 in FIG. 2A) such as storing the new timestamp of this update of the determined prepared results. Finally, the control unit 2 returns the updated version of the determined prepared results to the client 6 by message 37. Note that activities 36 and 37 may also occur in a different order, i.e. the control unit 2 first returns the prepared results to the client 6 and then updates the prepared results in the second platform and the associated update indicators.

On the other hand, in the case the comparison 32 does not indicate a requirement to update the determined prepared results (box 38 in FIG. 2B), the control unit 2 returns the determined prepared results to the client 6 by message 39, without updating the prepared results by inquiring the first platform 3.

The above basic definition of the update indicator as being given by (1 - acc) · t encompasses the technical effect of providing an improved validity of the prepared results in the long run, as will be explained next.

The present inventors have recognized that repeatedly updating such prepared results having a higher validity rate $\lambda_i$ which are regularly outdated by a change of their corresponding underlying original response data or updating such prepared results that yield promote the user accuracy as defined above is non-optimal. Such a strategy is, for example, described by WO 99/22315 by proposing to update those objects in a cache with the highest product Pi = Psi(t) x Pri(h), as explained above at the outset. Also focusing on updating prepared results with the best gain-cost ratio being e.g. defined as $\frac{p_i(1-acc_i)}{c_i}$ is likewise non-optimal. The present inventors have realized that these strategies only yield short-term increases of the prepared results' accuracy, but might cause an accuracy degradation of the pool 5 in the long run.

On the other hand, the update indicator as proposed herein provides a long-term accuracy increase of the prepared results stored in the second platform 4 by establishing a decision metric to either respond to a data request either with prepared results updated by the first platform 3 (which at the same time update the corresponding prepared results in the second platform 4) or to respond to a data request either with non-updated prepared results being held in the second platform 4 without inquiring the first platform 3 and updating these prepared results in the second platform 4. The long-term accuracy increase effect of the update indicator proposed herein will become apparent to the skilled person from the following explanations.

As explained above, previously known update strategies focus on updating prepared results which are likely to be invalid, i.e. employ an update indicator of (1 - $acc_i$), or refined versions of this such as $\frac{p_i(1-acc_i)}{c_i}$. Further, as also explained above, the computation costs to update a prepared result i by the first platform is denoted as $c_i$. These costs $c_i$ are incurred with each update of the prepared result i by the first platform 3. Thus, if e.g. the prepared result i is updated twice as often as another prepared result over a longer period of time, the accumulated amount of $c_i$ over this longer period of time is twice as high as the accumulated costs for updating the other prepared result during the same period of time. Therefore, the long-term update costs of a prepared result i can be defined by considering the long-term update frequency $f_i$ of the prepared result i (e.g. $f_i$ = 20 updates of i within 120 hours = 1/6 or $f_i$ = 6 updates of i within 120 hours = 1/20)

$$\text{Long Term Update Costs}_i = c_i \times f_i.$$

Considering these long-term update costs leads to the insight that prepared results should be updated in a way providing the highest accuracy gain at the lowest long-term update costs, i.e. with the highest $\frac{1-acc_i}{\text{Long term Cost}_i} = t\frac{1-acc_i}{c_i f_i}$. The actual long-term update frequency $f_i$ is generally unknown, but can be approximated by the following consideration: If, in response to a data request 30, it is decided to update a given prepared result i which has not been refreshed for a time period of $t_i$, the long-term update frequency of this prepared result i is assumed to be $\frac{1}{t_i}$. This will actually become true if the decision to update the prepared result i is indeed by taken. In other words, $\frac{1}{t_i}$ is considered as a potential long-term update frequency of the prepared result i. For this reason, the ratio $\frac{c_i}{t_i}$ can be used as an estimation of the long-term update costs of a given prepared result i. In general, a long-term accuracy optimization of the prepared result stored in the pool 5 of the second platform 4 should therefore update the prepared results with the highest

$$\frac{(1 - acc_i)}{c_i} t_i$$

This definition of the update indicator can still be generalized when assuming that the update cost $c_i$ is equal and constant for all prepared results and the update costs constraint is e.g. only employed to limit the number of updates of prepared results per unit of time via the first platform 3. In this case, the factor $c_i$ can be removed from the update indicator resulting in the definition of the update indicator as introduced above, i.e..

$$(1 - \mathrm{acc}_i) \cdot t_i$$

As also briefly indicated above, further refinements of this update indicator are possible, e.g. when additionally considering the popularity of prepared results, i.e. the user accuracy:

$$\frac{p_i(1 - \mathrm{acc}_i)}{c_i} \, t_i$$

or

$$p_i \, (1 - \mathrm{acc}_i) \cdot t_i$$

Furthermore, $\mathrm{acc}_i$ may be replaced by the specifically employed probabilistic model modeling the validity of prepared results decreasing over time, such as $\mathrm{acc}_i = e^{-\lambda_i t_i}$ as deduced further above. This results in more specific version of the update indicator definitions, namely

$$\left(1 - e^{-\lambda_i t_i}\right) t_i$$

or

$$\frac{\left(1 - e^{-\lambda_i t_i}\right)}{c_i} \, t_i$$

or

$$p_i \left(1 - e^{-\lambda_i t_i}\right) t_i$$

or

$$\frac{p_i \left(1 - e^{-\lambda_i t_i}\right)}{c_i} \, t_i$$

FIG. 4 present a more specific example of a database environment 1. This example differs from the more general architecture shown by FIG. 1 in that it includes certain additional components, namely the control data store 10 and the predictive model manager 12. The control data store 10 is connected to the control unit 2 via interface 11 and to the predictive model manager via interface 15. The predictive model manager is connected to the first platform 3 via interface 13, to the control unit 2 via interface 14 and to the control data store via interface 15.

In some embodiments, the control data store 10 stores data to compute the update indicator for given prepared results stored in the pool 5 of the second platform 4. In particular, the control data store 10 stores timestamps indicating the last update time of the prepared results in order to compute the age $t_i$ at a given point of time. Optionally, the control data store 10 stores data to model the probability for prepared results maintained in the pool 5 of the second platform 4 to be accurate, for example the validity rates $\lambda_i$ of the prepared results in order to compute $\mathrm{acc}_i = e^{-\lambda_i t_i}$ at a given point of time. Optionally, the control data store 10 further stores additional control data utilized to determine the values of the various examples of the update indicator as described above, e.g. the request rate (popularity) $p_i$ of the prepared results stored in the pool 5 of the second platform 4 and/or the computation costs $c_i$ to update prepared results. The control data kept by the control data store 10 is associated with the prepared results stored maintained in the pool 5 of the second platform 4. Thus, the control data stored 10 also stores identification information of the prepared results in order to associate the control data with the prepared results. For example, a database record of the control data store 10 is defined as follows:

(identification of prepared result i, last update time of i, $\lambda_i$, $p_i$, $c_i$)

The identification of the prepared results utilized in the control data store 10 is, for example, the primary key values of the prepared results as stored in the pool 5 of the second platform 4.

In some embodiments, the control data store 10 is an integrated part of the control unit 2. In other embodiments, the control data store 10 is an integrated part of the second platform 4. In this case, the control data maintained by the control data store 10 is e.g. stored in a database table being associated with the database table(s) of the prepared results in the pool 5. In still other embodiments, the control data store is a stand-alone component (e.g. realized by a dedicated server system).

The predictive model manager 12 is arranged to update certain control data stored by the control data store, such as the validity rates $\lambda_i$, the popularity $p_i$, and the update costs $c_i$. In order to determine current values for these parameters, the predictive model manager 12 receives input data from the first platform 3 and from the control unit 2. More specifically, the first platform 3 transmits information about the updated prepared results (the updates occurring in response to messages 34 (FIG. 2A)) to the predictive model manager 12, i.e. which results have been updated at which time and whether or not the updates led to a different content of the updated results. The first platform 3 also transmits information regarding the computation costs to update prepared results to the model manager 12 (these information are determined by the first platform itself by monitoring the updates of the various prepared results and the update costs involved and/or from log information received from an original source of the prepared results such as webservers). The control unit 2 transmits information about incoming data requests 30 and the prepared results requested by the data requests 30 to the predictive model manager 12, e.g. which prepared results were returned to inquiring clients at which times. In some embodiments, this input communication from the first platform 3 and/or from the control unit 2 to the predictive model manager 12 occurs asynchronously from processing and serving data requests 30 as visualized by FIGS. 2A, 2B, 5A, 5B, 6A and 6B. In other embodiments, the first platform 3 transmits the information about an updated prepared result to the predictive model manager 12 synchronously with the update, e.g. immediately after the first platform 3 has returned the updated result to the control unit 2. In such embodiments, also the control unit 2 may transmit the information about incoming data requests 30 and respective returned results to clients 6 to the predictive model manager 12 synchronously with the processing of the data requests 30, e.g. immediately after the control unit 3 has returned the corresponding results to the inquiring client 6.

The predictive model manager 12 processes these inputs from the first platform 3 and the control unit 2 and provides current control information resulting from the processing to the control data store 10. More specifically, the predictive model manager 12 utilizes the information about the updated prepared results received from the first platform 3, encompassing at least the information whether or not an update of a prepared result by the first platform led to a change of the content of the prepared result and a timestamp of the update, to maintain validity rates $\lambda_i$ for each of the prepared results stored in the pool 5 of the second platform 4. The predictive model manager 12 utilizes the information about the computational costs received from the first platform 3 to maintain the parameters $c_i$ for each prepared result i stored in the pool 5 of the second platform 4. The predictive model manager 12 utilizes the information about the incoming data requests 30 received from the control unit 2 and correspondingly requested prepared results in order to maintain the popularity values $p_i$ for each of the prepared results stored in the pool 5 of the second platform 4. The resulting current values of $\lambda_i$, $p_i$ and/or $c_i$ are transmitted from the predictive model manager to the control data store 10 and are thus made available to the control unit 2 in order to determine the update indicator values in the course of processing incoming data requests 30 (activity 31). Updates of the current values of $\lambda_i$, $p_i$ and/or $c_i$ are sent by the predictive model manager 12 to the control data store in regular intervals and/or on demand, i.e. when values of control data have been changed.

In some embodiments, the predictive model manager 12 and/or the control data store 10 employ a distributed batch framework utilizing e.g. Apache Hadoop® enabling both components to execute intensive computing processes with large amounts of data (e.g. in the order of PetaBytes) on server clusters.

Exemplary message sequences occurring in the exemplary architecture of FIG. 4 are shown by FIGS. 5A and 5B. Similar to FIGS. 2A and 2B, FIG. 5A shows the variant in which the update indicator values of the prepared results to be returned to the client 6 indicate a need to update the prepared results and FIG. 5B shows the variant in which the update indicator values of the prepared results to be returned to the client 6 do not indicate a need to update the prepared results.

In both variants, the process begins with a transmission of a data request 30 from the client 6 to the control unit 2. In response to receiving the data request 30, the control unit 2 determines identification information (e.g. primary key values) of prepared results which fulfill criteria included in the data request 30 and associated update indicator values (activity 31A). As a simple example, the data request 30 requests the number of available seats in the flight LH123 on 1st July 2015. In response to receiving this data request 30, the control unit 2 utilizes the key "LH123-1JUL15" already included in the request to retrieve the last update time of the prepared result LH123-1JUL15-42 (i.e. the prepared result indicates 42 free seats, wherein the number 42 of available seats is not known to the control unit 2 at that stage) and the validity rate $\lambda_{LH123-1JUL15}$ from the control data store 10. The control data store 10 responds with respective values of the update timestamp and validity rate $\lambda_{LH123-1JUL15}$ (activity 31B in FIG. 5A and 5B). The control unit 2 then calculates the update indicator of the prepared result LH123-1JUL15-42 (activity 31C in FIG. 5A and FIG. 5B) by calculating the age $t_{LH123-1JUL15}$ (last update timestamp of LH123-1JUL15-42 minus current time) and then calculating $(1 - e^{-\lambda_i t_i}) t_i$.

The control unit 2 then performs the comparison of the calculated update indicator value with the threshold value (activity 32 in FIG. 5A and FIG. 5B). If the comparison indicates a need to update the LH123-1JUL15-42 (box 33 in FIG. 5A), the control unit 2 retrieves an updated version of the prepared result from the first platform 3 (activity 34 in FIG. 5A). In an embodiment, the first platform itself is an original inventory of available flight seats and returns the update value (e.g. LH123-1JUL15-23, i.e. 23 free seats) to the control unit 2 on the basis of its own inventory data. In another embodiment, the first platform 3 retrieves the requested current available seat information from further sources and returns the updated prepared result LH123-1JUL15-23 to the control unit 2 afterwards (activity 35 in FIG. 5A). The control unit 2, after having received the updated prepared result from the first platform 3, returns the updated prepared result to the client 6 (activity 37 in FIG. 5A), updates the prepared result in the pool 5 of the second platform 4 (e.g. by replacing the previous outdated value 42 with the updated, current value 23, activity 36A) and also updates the last update timestamp of LH123-1JUL15 in the control data store 10 (activity 36B). Note that activities 36A, 36B and 37 may occur in any order.

Alternatively, the comparison between the current update indicator value of LH123-1JUL15 and the threshold conducted by control unit 2 (activity 32) indicates that an update of LH123-1JUL15 is not necessary (box 38 in FIG. 5B). In this case, the control unit 2 retrieves the value of LH123-1JUL15 (e.g. 42 available seats) from the pool 5 of the second platform 4 (activity 40A in FIG. 5B) and returns this value as a response to data request 30 to the client 6 (activity activity 39).

In other embodiments, depending on the content and definition of the prepared results and criteria included in the data request 30, activity 31 is more complex (FIGS. 6A and 6B) e.g. because the key values of the prepared results in which the client 6 is interested are not included in the data request 30 and, thus, a search may be required to determine which prepared results fulfill the search criteria included in the data request 30. For example, the prepared results stored by the pool 5 specify pre-computed priced travel recommendations and the data request 30 e.g. asks for the cheapest travels between Frankfurt and Boston with a departure between 1st July 2015 and 10th July 2015 and a stay duration between 11 and 15 days. In scenarios of this type, in some embodiments, the control unit 2 first identifies prepared results stored in the pool 5 of the second platform 4 which fulfill search criteria of the data request 30. Thus, in these embodiments, activity 31A (FIG. 6A) is an inquiry of the control unit 2 to the second platform 4 in order to retrieve identification information of prepared results complying with the search criteria included in the data request 30. Referring to the latest example, the second platform 4 e.g. returns all travel recommendations stored in the pool 5 for travels between Frankfurt and Boston with a departure between 1st July 2015 and 10th July 2015 and a stay duration between 11 and 15 days (activity 31B in FIG. 6A).

The control unit 2 then determines the update indicator values for all identified prepared results in the manner described above (retrieving the respective control data from the control data store 10 by activities 31C and 31D in FIG. 6A and calculating the update indicator values by activity 31E in FIG. 6A) and performs the comparison between update indicator value and threshold for each identified prepared result (activity 32 in FIG. 6A). For all prepared results for which the comparison indicates a need to update the respective prepared result (box 33 in FIG. 6A), the control unit 2 retrieves an updated version of the respective prepared result from the first platform 3 (activities 34 and 35 in FIG. 6B). Optionally, as regards the remaining prepared results for which the comparison between update indicator and threshold value does not indicate a need to update, the control unit 2 retrieves the content of these not-to-be-updated prepared results from the second platform 4 (activities 40A and 40B in FIG. 6B; this applies if the control unit 2 has not already retrieved the content of all the prepared results fulfilling the search criteria with activities 31A and 31B beforehand). After having received the updated versions of the prepared results in response to request 34 (activity 35), the control unit 2 stores the updated prepared results in the pool 5 of the second platform 4 (activity 36A in FIG. 6B), updates the update timestamps of the updated prepared results in the control data store 10 (activities 36B in FIG. B), optionally post-processes the prepared results retrieved from the second platform 4 and the updated versions of the prepared results retrieved from the first platform 3 (activity 41 in FIG. 6B), which is e.g. a determination of a subset of prepared results out of the updated prepared results and the not-updated prepared results determined before to be returned to the client 6 (in the above example, selecting the most inexpensive travel recommendation), and returns these results to the client 6 (activity 37 in FIG. 6B).

In some embodiments, still different message flows are employed, depending on the particular characteristics of the database model(s) employed by the database environment 1 and structure and criteria included in the data requests 30. For example, in some embodiments, post-processing of prepared results (activity 41 in FIG. 6A) is not employed, but all the prepared results retrieved from the second platform 4 and all updated versions of the prepared results retrieved from the first platform 3 are returned to the client 6. In such embodiments, the prepared results retrieved from the second platform 4 are already returned to the client 6 as soon as they are available (activity 39 in FIG. 6B) which is generally earlier than retrieval of the updated versions of the prepared results from the first platform 3 concludes (because updating prepared results by the first platform generally requires substantially more time than retrieving prepared results from the second platform 4, as explained in detail above). Hence, in this situation, activity 37 of FIG. 6B then only encompasses returning the updated versions of the prepared results retrieved from the first platform 3.

In some embodiments, the message flow shown in FIGS. 6A and 6B is also adapted in that the post-processing activity 41 is performed already at an earlier stage, for example by the control unit 2 after having received the content of the prepared results with activity 31B or by the second platform 4 before returning the prepared results (or at least their identities) with activity 31B. Again referring to the above example of returning the cheapest travel recommendation for travels between Frankfurt and Boston with a departure between 1st July 2015 and 10th July 2015 and a stay duration between 11 and 15 days, in some embodiments, the second platform 4 is arranged to determine a limited number of the most inexpensive travel recommendations for travels between Frankfurt and Boston with a departure between 1st July 2015 and 10th July 2015 and a stay duration between 11 and 15 days (as opposed to returning all priced travel recommendations for travels between Frankfurt and Boston with a departure between 1st July 2015 and 10th July 2015 and a stay duration between 11 and 15 days stored in the pool 5). For example, with activity 31B in FIG. 6B, the second platform 4 returns only the five cheapest travel recommendations. The subsequent activities of the control unit 2 (activities 31C, 31D, 31E, 32-38) are then limited to only these five retrieved prepared results and are performed in the same manner as described above.

The threshold value is dynamically adapted depending on the load of the first platform 3. In this way, by using the adaptive threshold value, the amount of prepared results which are updated via the first platform 3 and therefore the load of the first platform are controlled. If the load of the first platform 3 is too high (too many prepared results are updated via the first platform 3 in a given time unit) and the load is to be reduced, the threshold value is increased with the effect that the portion of prepared results which are updated via the first platform 3 is decreased and the portion of prepared results which are retrieved from the second platform 4 and returned to the client 6 without update is increased. If, on the other hand, the first platform 3 has free resources which can be utilized to update more prepared results in a given time unit than currently updated, the threshold value is decreased with the effect that the portion of prepared results which are updated via the first platform 3 is increased and the portion of prepared results which are retrieved from the second platform 4 and returned to the client 6 without update are decreased.

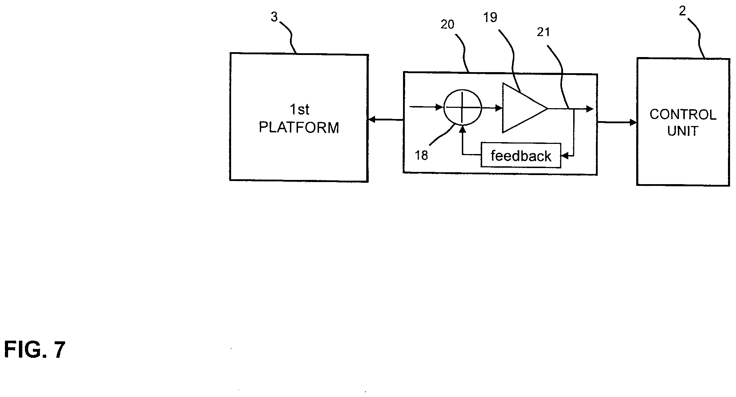

In some embodiments, dynamically adapting the threshold value is realized by maintaining a feedback control loop 20 between the first platform 3 and the control unit 2 (FIG. 7). The feedback control loop 20 is defined by three variables, namely the control value 21, the setpoint 18 and the actuating variable 19. The control value 21 is the variable to be controlled (to be kept constant at a given target level) and is therefore defined by a current actual load factor of the first platform 3. The setpoint 18 of the feedback control loop 20 is given by a desired target load factor of the first platform 3. The actuating variable of the feedback control loop 20 is the threshold value which impacts the actual load factor of the first platform, i.e. controls the control value 21.

In some embodiments, the feedback control loop 20 is realized by the first platform 3 and the control unit 2 communicating with each other in regular intervals as follows. The first platform regularly compares the current actual load factor 21 with the desired target load factor 18. If the current actual load factor 21 is N% higher than the desired target load factor 18 (e.g. 10%), the threshold value is increased by a ratio N/B% (e.g. 10% divided by 2 = 5%) wherein B is a smoothing avoiding overreactions of the dynamic threshold value adaption and enabling a smooth convergence between the current load 21 and the target load 18. As a result of the decreased threshold value, the current actual load factor 21 will decrease. If, on the other hand, the current actual load factor 21 is below the desired target load factor 18 by N%, the threshold value is decreased by N/B%, resulting in a higher amount of prepared results being updated with the first platform 3 and, thus, increasing the current actual load factor 21.

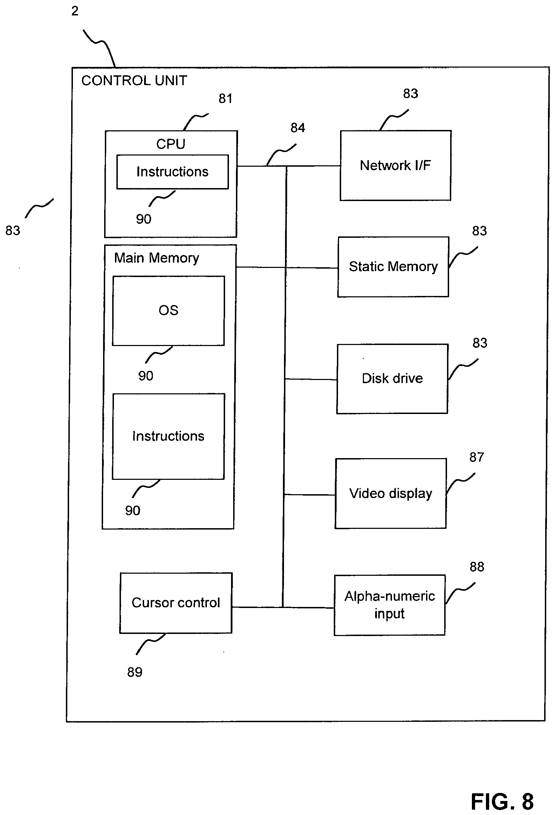

Finally, FIG. 8 is a diagrammatic representation of a computer system which provides the functionality of the control unit 2. Within the control unit 2, a set of instructions, to cause the computer system to perform any of the methods discussed herein, are executed. The control unit 2 includes a processor 81, a main memory 82 and a network interface device 83, which communicate with each other via a bus 84. Optionally, the control unit 2 further includes a static memory 85 and a disk-drive unit 86. A video display 87, an alpha-numeric input device 88 and a cursor control device 89 may form a user interface for e.g. an administrator to control the control unit 2.

The network interface device 83 connects the control unit 2 to the first platform 3 via the interface 9 and to the second platform 4 via the interface 8. The network interface device 83 also connects the control unit 2 to the clients 6 via interface 7. A set of instructions (i.e. software) 90 embodying any one, or all, of the methods described above, resides completely, or at least partially, in or on a machine-readable medium, e.g. the main memory 82 and/or the processor 81. A machine-readable medium on which the software 90 resides may also be a non-volatile data carrier (e.g. a non-removable magnetic hard disk or an optical or magnetic removable disk) which is part of disk drive unit 86. The software 90 may further be transmitted or received as a propagated signal e.g. via the Internet or any other network through the network interface device 83. Basic operation of the control unit 2 including user interface and network communication is controlled by operating system 91.

The present approach to control routing of incoming data requests by the control unit to the first platform and or to the second platform on the basis of the update indicator (1 - acc) · t being compared with the threshold value provides an improved the long-term validity of prepared results maintained in the pool of the second platform. This approach allows to optimally determine which prepared results to be returned in response to data requests are to be retrieved from the first platform and thereby updated in the second platform. In this way, an ineffective focus on repeatedly updating very volatile prepared result is avoided, thereby improving the accuracy/validity of the prepared results in the long run.

Although certain products and methods constructed in accordance with the teachings of the invention have been described herein, the scope of coverage of this patent is not limited thereto. On the contrary, this patent covers all embodiments of the teachings of the invention fairly falling within the scope of the appended claims either literally or under the doctrine of equivalents.

## Claims

1. A method for handling data requests directed to a database environment, the database environment comprising at least one first platform providing original results to be stored in a second platform as prepared results, the second platform maintaining a pool of the prepared results in order to be returned to data requests, and a control unit for processing the data requests directed to the database environment, wherein each prepared result maintained in the pool of the second platform is associated with an update indicator being a measure that the associated prepared result kept in the pool of the second platform is to be updated, the method comprising:

   - receiving, by the control unit, a data request;
   - determining, by the control unit, at least one prepared result corresponding to the data request;
   - comparing, by the control unit, the update indicator of the determined prepared result corresponding to the data request with a threshold value, wherein the threshold value is dynamically adapted depending on the load of the first platform;
   - in response to the control unit determining that the comparison indicates a requirement to update the prepared result,

      → retrieving, by the control unit from the first platform, an updated version of the at least one prepared result;
      → updating, by the control unit, the prepared result in the pool of the second platform and the associated update indicator based on the updated version of the at least one prepared result; and
      → returning, by the control unit, the updated version of the at least one result,

   - in response to the control unit determining that the comparison does not indicate a requirement to update the at least one prepared result,

      → the control unit returning the at least one determined prepared result; wherein the update indicator is defined by $\dfrac{(1-\mathrm{acc}) \cdot t}{c}$, wherein acc is a probability that the associated prepared result is valid, t an age of the associated prepared result, and c a measure for computation resources of the first platform needed to prepare the updated version of the associated prepared result.

2. The method of claim 1, wherein the update indicator is defined by $\dfrac{p \cdot (1-\mathrm{acc}) \cdot t}{c}$, wherein p is an access frequency of the associated prepared result from the database environment and c is a measure for computation resources of the first platform needed to prepare the updated version of the associated prepared result.

3. The method of any of claims 1 to 2, further comprising

   → querying, by the control unit, a control data store on the basis of key information identifying the at least one prepared result;

→ receiving, by the control unit from the control data store, control data specifying the update indicator associated with the at least one prepared result.

4. The method of claim 3, wherein determining the at least one prepared result comprises

→ querying, by the control unit, the second platform for the at least one determined prepared result fulfilling criteria specified by the data request;
→ receiving, by the control unit, the at least one prepared result from the pool of prepared results of the second platform.

5. The method of any of claims 1 to 2, wherein determining the at least one prepared result corresponding to the data request comprises:

→ relaying, by the control unit, the data request to the second platform; and
→ receiving, by the control unit from the second platform, the at least one prepared result fulfilling criteria specified by the data request;
wherein the method further comprises:
→ retrieving, by the control unit, the update indicator associated with the received prepared result.

6. The method of any of claims 1 to 5, wherein the at least one prepared result corresponding to the data request comprises at least two prepared results, a first prepared result and a second prepared result, the method further comprising:

→ determining, by the control unit, that the comparison indicates a requirement to update the first prepared result, but does not indicate a requirement to update the second prepared result,
→ the control unit retrieving an updated version of the first prepared result from the first platform and updating the first prepared result in the pool of the second platform and the associated update indicator based on the retrieved updated version of the first prepared result; and
→ returning the updated version of the first prepared result and the second prepared result.

7. The method of any of claims 1 to 6, wherein dynamically adapting the threshold value comprises maintaining a feedback control loop between the first platform and the control unit, wherein a control value of the feedback control loop is defined by a load factor of the first platform, a setpoint of the feedback control loop is given by a target load factor of the first platform, and an actuating variable of the feedback control loop is given by the threshold value.

8. A control unit for handling data requests directed to a database environment, the control unit being coupled to a first platform providing original results to be stored in a second platform as prepared results, the second platform maintaining a pool of the prepared results in order to be returned to data requests, wherein each prepared result maintained by the second platform is associated with an update indicator being a measure that the associated prepared result kept in the second platform is to be updated, the control unit being arranged to:

→ receive a data request;
→ determine at least one prepared result corresponding to the data request;
→ compare the update indicator of the determined prepared result corresponding to the data request with a threshold value, wherein the threshold value is dynamically adapted depending on the load of the first platform;
→ in response to determining that the comparison indicates a requirement to update the prepared result;

→ retrieve an updated version of the at least one prepared result based on the original response data from the first platform;
→ update the prepared result in the pool of the second platform and the associated update indicator based on the updated version of the at least one prepared result; and
→ return the updated version of the at least one result;

- in response to determining that the comparison does not indicate a requirement to update the at least one prepared result,

→ return the determined at least one prepared result;

wherein the update indicator is defined by $\dfrac{(1-\text{acc}) \cdot t}{c}$, wherein acc is a probability that the associated prepared result is valid, t an age of the associated prepared result, and c a measure for computation resources of the first platform needed to prepare the updated version of the associated prepared result.

9. The control unit of claim 8 being arranged to perform the method of any of claims 2 to 7.

10. A computer program for execution by a control unit for handling data requests directed to a database environment, the control unit being coupled to a first platform providing original results to be stored in a second platform as prepared results, the second platform maintaining a pool of the prepared results in order to be returned to data requests, wherein each prepared result maintained by the second platform is associated with an update indicator being a measure that the associated prepared result kept in the second platform is to be updated, the computer program being configured to - when executed by the control unit - to cause the control unit to:

- receive a data request;
- determine at least one prepared result corresponding to the data request;
- compare the update indicator of the determined prepared result corresponding to the data request with a threshold value, wherein the threshold value is dynamically adapted depending on the load of the first platform;
- in response to determining that the comparison indicates a requirement to update the prepared result;

→ retrieve an updated version of the at least one prepared result based on the original response data from the first platform;
→ update the prepared result in the pool of the second platform and the associated update indicator based on the updated version of the at least one prepared result; and
→ return the updated version of the at least one result;

- in response to determining that the comparison does not indicate a requirement to update the at least one prepared result,

→ return the determined at least one prepared result;

wherein the update indicator is defined by $\dfrac{(1-\text{acc}) \cdot t}{c}$, wherein acc is a probability that the associated prepared result is valid, t an age of the associated prepared result, and c a measure for computation resources of the first platform needed to prepare the updated version of the associated prepared result.

11. The computer program of claim 10 being configured to - when executed by the control unit - to cause the control unit to perform the method of any of claims 2 to 9.

**Patentansprüche**

1. Verfahren zum Handhaben von Datenanforderungen, die an eine Datenbankumgebung gerichtet sind, wobei die Datenbankumgebung mindestens eine erste Plattform umfasst, die Originalergebnisse bereitstellt, die in einer zweiten Plattform als vorbereitete Ergebnisse gespeichert werden, wobei die zweite Plattform einen Pool der vorbereiteten Ergebnisse verwaltet, um an Datenanforderungen zurückgegeben zu werden, sowie eine Steuereinheit zum Verarbeiten der an die Datenbankumgebung gerichteten Datenanforderungen, wobei jedes vorbereitete Ergebnis, das in dem Pool der zweiten Plattform verwaltet wird, einem Aktualisierungsindikator zugeordnet ist, der ein Maß ist, dass das zugehörige vorbereitete Ergebnis, das in dem Pool der zweiten Plattform gehalten wird, aktualisiert werden soll, wobei das Verfahren umfasst:

- Empfangen, durch die Steuereinheit, einer Datenanforderung;
- Ermitteln, durch die Steuereinheit, mindestens eines vorbereiteten Ergebnisses entsprechend der Datenanforderung;
- Vergleichen, durch die Steuereinheit, des Aktualisierungsindikators des ermittelten vorbereiteten Ergebnisses entsprechend der Datenanforderung mit einem Schwellwert, wobei der Schwellwert in Abhängigkeit von der Last der ersten Plattform dynamisch angepasst wird;

- in Reaktion darauf, dass die Steuereinheit ermittelt, dass der Vergleich einen Bedarf anzeigt, das vorbereitete Ergebnis zu aktualisieren,

→ Abrufen, durch die Steuereinheit, einer aktualisierten Version des mindestens einen vorbereiteten Ergebnisses von der ersten Plattform;
→ Aktualisieren, durch die Steuereinheit, des vorbereiteten Ergebnisses in dem Pool der zweiten Plattform und des zugehörigen Aktualisierungsindikators basierend auf der aktualisierten Version des mindestens einen vorbereiteten Ergebnisses; und
→ Rückgabe, durch die Steuereinheit, der aktualisierten Version des mindestens einen Ergebnisses,

- in Reaktion darauf, dass die Steuereinheit ermittelt, dass der Vergleich keinen Bedarf anzeigt, das mindestens eine vorbereitete Ergebnis zu aktualisieren,

→ die Steuereinheit gibt das mindestens eine ermittelte vorbereitete Ergebnis zurück;

wobei der Aktualisierungsindikator durch $\frac{(1-acc) \cdot t}{c}$ definiert ist, wobei acc eine Wahrc scheinlichkeit ist, dass das zugehörige vorbereitete Ergebnis gültig ist, t ein Alter des zugehörigen vorbereiteten Ergebnisses ist und c ein Maß für die Berechnungsressourcen der ersten Plattform ist, die nötig sind, um die aktualisierte Version des zugehörigen vorbereiteten Ergebnisses vorzubereiten.

2. Verfahren nach Anspruch 1, wobei der Aktualisierungsindikator durch $\frac{p \cdot (1-acc) \cdot t}{c}$ definiert ist, wobei p eine Zugriffshäufigkeit des zugehörigen vorbereiteten Ergebnisses aus der Datenbankumgebung ist und c ein Maß für die Berechnungsressourcen der ersten Plattform ist, die nötig sind, um die aktualisierte Version des zugehörigen vorbereiteten Ergebnisses vorzubereiten.

3. Verfahren nach einem der Ansprüche 1 bis 2, ferner umfassend:

→ Abfragen, durch die Steuereinheit, eines Steuerdatenspeichers auf der Basis von Schlüsselinformationen, die das mindestens eine vorbereitete Ergebnis identifizieren;
→ Empfangen, durch die Steuereinheit, von Steuerdaten von dem Steuerdatenspeicher, die den Aktualisierungsindikator spezifizieren, der dem mindestens einen vorbereiteten Ergebnis zugeordnet ist.

4. Verfahren nach Anspruch 3, wobei das Ermitteln des mindestens einen vorbereiteten Ergebnisses umfasst:

→ Abfragen, durch die Steuereinheit, der zweiten Plattform nach dem mindestens einen ermittelten vorbereiteten Ergebnis, das die durch die Datenanforderung spezifizierten Kriterien erfüllt;
→ Empfangen, durch die Steuereinheit, des mindestens einen vorbereiteten Ergebnisses aus dem Pool von vorbereiteten Ergebnissen von der zweiten Plattform.

5. Verfahren nach einem der Ansprüche 1 bis 2, wobei das Ermitteln des mindestens einen vorbereiteten Ergebnisses entsprechend der Datenanforderung umfasst:

→ Weiterleiten, durch die Steuereinheit, der Datenanforderung an die zweite Plattform; und
→ Empfangen, durch die Steuereinheit, von der zweiten Plattform des mindestens einen ermittelten vorbereiteten Ergebnis, das die durch die Datenanforderung spezifizierten Kriterien erfüllt;
wobei das Verfahren weiterhin umfasst:
→ Abrufen, durch die Steuereinheit, des Aktualisierungsindikators, der dem empfangenen vorbereiteten Ergebnis zugeordnet ist.

6. Verfahren nach einem der Ansprüche 1 bis 5, wobei das mindestens eine vorbereitete Ergebnis entsprechend der Datenanforderung mindestens zwei vorbereitete Ergebnisse, ein erstes vorbereitetes Ergebnis und ein zweites vorbereiteter Ergebnis, umfasst, wobei das Verfahren ferner umfasst:

→ Ermitteln, durch die Steuereinheit, dass der Vergleich einen Bedarf anzeigt, das erste vorbereitete Ergebnis zu aktualisieren, aber keinen Bedarf anzeigt, das zweite vorbereitete Ergebnis zu aktualisieren,
→ die Steuereinheit ruft eine aktualisierte Version des ersten vorbereiteten Ergebnisses von der ersten Plattform ab und aktualisiert das erste vorbereitete Ergebnis in dem Pool der zweiten Plattform und den zugehörigen Aktualisierungsindikator basierend auf der abgerufenen aktualisierten Version des ersten vorbereiteten Ergebnisses; und

→ Zurückgeben der aktualisierten Version des ersten vorbereiteten Ergebnisses und des zweiten vorbereiteten Ergebnisses.

7. Verfahren nach einem der Ansprüche 1 bis 6, wobei das dynamische Anpassen des Schwellwerts umfasst, dass eine Rückkopplungsregelschleife zwischen der ersten Plattform und der Steuereinheit aufrechterhalten wird, wobei ein Steuerwert der Rückkopplungsregelschleife durch einen Lastfaktor ersten Plattform definiert ist, ein Sollwert der Rückkopplungsregelschleife durch einen Ziellastfaktor der ersten Plattform gegeben ist, und eine Stellgröße der Rückkopplungsregelschleife durch den Schwellwert gegeben ist.

8. Eine Steuereinheit zum Handhaben von Datenanforderungen, die an eine Datenbankumgebung gerichtet sind, wobei die Steuereinheit mit einer ersten Plattform verbunden ist, die Originalergebnisse bereitstellt, die in einer zweiten Plattform als vorbereitete Ergebnisse gespeichert werden, wobei die zweite Plattform einen Pool der vorbereiteten Ergebnisse verwaltet, um an Datenanforderungen zurückgegeben zu werden, wobei jedes vorbereitete Ergebnis, das in dem Pool der zweiten Plattform verwaltet wird, einem Aktualisierungsindikator zugeordnet ist, der ein Maß ist, dass das zugehörige vorbereitete Ergebnis, das in dem Pool der zweiten Plattform gehalten wird, aktualisiert werden soll, wobei die Steuereinheit ausgestaltet ist, um:

- eine Datenanforderung zu empfangen;
- mindestens ein vorbereitetes Ergebnis entsprechend der Datenanforderung zu ermitteln;
- den Aktualisierungsindikator des ermittelten vorbereiteten Ergebnisses entsprechend der Datenanforderung mit einem Schwellwert zu vergleichen, wobei der Schwellwert in Abhängigkeit von der Last der ersten Plattform dynamisch angepasst wird;
- in Reaktion darauf, dass ermittelt wird, dass der Vergleich einen Bedarf anzeigt, das vorbereitete Ergebnis zu aktualisieren,

→ eine aktualisierte Version des mindestens einen vorbereiteten Ergebnisses basierend auf der Originalantwortdaten von der ersten Plattform abzurufen;
→ das vorbereitete Ergebnis in dem Pool der zweiten Plattform und den zugehörigen Aktualisierungsindikator basierend auf der aktualisierten Version des mindestens einen vorbereiteten Ergebnisses zu aktualisieren; und
→ die aktualisierte Version des mindestens einen Ergebnisses zurückzugeben;

- in Reaktion darauf, dass ermittelt wird, dass der Vergleich keinen Bedarf anzeigt, das mindestens eine vorbereitete Ergebnis zu aktualisieren,

→ das mindestens eine ermittelte vorbereitete Ergebnis zurückzugeben;

wobei der Aktualisierungsindikator durch $\frac{(1-\mathrm{acc}) \cdot t}{c}$ definiert ist, wobei acc eine Wahrscheinlichkeit ist, dass das zugehörige vorbereitete Ergebnis gültig ist, t ein Alter des zugehörigen vorbereiteten Ergebnisses ist und c ein Maß für die Berechnungsressourcen der ersten Plattform ist, die nötig sind, um die aktualisierte Version des zugehörigen vorbereiteten Ergebnisses vorzubereiten.

9. Steuereinheit nach Anspruch 8, die ausgestaltet ist, das Verfahren nach einem der Ansprüche 2 bis 7 durchzuführen.

10. Computerprogramm zur Ausführung durch eine Steuereinheit zum Handhaben von Datenanforderungen, die an eine Datenbankumgebung gerichtet sind, wobei die Steuereinheit mit einer ersten Plattform verbunden ist, die Originalergebnisse bereitstellt, die in einer zweiten Plattform als vorbereitete Ergebnisse gespeichert werden, wobei die zweite Plattform einen Pool der vorbereiteten Ergebnisse verwaltet, um an Datenanforderungen zurückgegeben zu werden, wobei jedes vorbereitete Ergebnis, das in dem Pool der zweiten Plattform verwaltet wird, einem Aktualisierungsindikator zugeordnet ist, der ein Maß ist, dass das zugehörige vorbereitete Ergebnis, das in dem Pool der zweiten Plattform gehalten wird, aktualisiert werden soll, wobei das Computerprogramm so ausgestaltet ist, dass es - wenn es von der Steuereinheit ausgeführt wird - die Steuereinheit veranlasst:

- eine Datenanforderung zu empfangen;
- mindestens ein vorbereitetes Ergebnis entsprechend der Datenanforderung zu ermitteln;
- den Aktualisierungsindikator des ermittelten vorbereiteten Ergebnisses entsprechend der Datenanforderung mit einem Schwellwert zu vergleichen, wobei der Schwellwert in Abhängigkeit von der Last der ersten Plattform dynamisch angepasst wird;
- in Reaktion darauf, dass ermittelt wird, dass der Vergleich einen Bedarf anzeigt, das vorbereitete Ergebnis zu aktualisieren,

→ eine aktualisierte Version des mindestens einen vorbereiteten Ergebnisses basierend auf der Originalantwortdaten von der ersten Plattform abzurufen;
→ das vorbereitete Ergebnis in dem Pool der zweiten Plattform und den zugehörigen Aktualisierungsindikator basierend auf der aktualisierten Version des mindestens einen vorbereiteten Ergebnisses zu aktualisieren; und
→ die aktualisierte Version des mindestens einen Ergebnisses zurückzugeben;

- in Reaktion darauf, dass ermittelt wird, dass der Vergleich keinen Bedarf anzeigt, das mindestens eine vorbereitete Ergebnis zu aktualisieren,

→ das mindestens eine ermittelte vorbereitete Ergebnis zurückzugeben;

wobei der Aktualisierungsindikator durch $\frac{(1-acc) \cdot t}{c}$ definiert ist, wobei acc eine Wahrscheinlichkeit ist, dass das zugehörige vorbereitete Ergebnis gültig ist, t ein Alter des zugehörigen vorbereiteten Ergebnisses ist und c ein Maß für die Berechnungsressourcen der ersten Plattform ist, die nötig sind, um die aktualisierte Version des zugehörigen vorbereiteten Ergebnisses vorzubereiten.

**11.** Computerprogramm nach Anspruch 10, das - wenn es von der Steuereinheit ausgeführt wird - konfiguriert ist, um zu veranlassen, dass die Steuereinheit das Verfahren nach einem der Ansprüche 2 bis 7 ausführt.

**Revendications**

**1.** Méthode de gestion de demandes de données adressées à un environnement de base de données, l'environnement de base de données comprenant au moins une première plate-forme fournissant des résultats originaux à stocker dans une deuxième plate-forme comme des résultats préparés, la deuxième plate-forme conservant une réserve des résultats préparés de manière à être renvoyés pour des demandes de données, et une unité de commande pour traiter les demandes de données adressées à l'environnement de base de données, dans laquelle chaque résultat préparé conservé dans la réserve de la deuxième plate-forme est associé à un indicateur de mise à jour qui est une mesure que le résultat préparé associé gardé dans la réserve de la deuxième plate-forme doit être mis à jour, la méthode comprenant :

- la réception, par l'unité de commande, d'une demande de données ;
- la détermination, par l'unité de commande, d'au moins un résultat préparé correspondant à la demande de données ;
- la comparaison, par l'unité de commande, de l'indicateur de mise à jour du résultat préparé déterminé correspondant à la demande de données avec une valeur de seuil, dans laquelle la valeur de seuil est adaptée dynamiquement en fonction de la charge de la première plate-forme ;
- en réponse à la détermination par l'unité de commande que la comparaison indique une exigence de mettre à jour le résultat préparé,

-- la récupération, par l'unité de commande à partir de la première plate-forme, d'une version mise à jour de l'au moins un résultat préparé ;
-- la mise à jour, par l'unité de commande, du résultat préparé dans la réserve de la deuxième plate-forme et de l'indicateur de mise à jour associé sur la base de la version mise à jour de l'au moins un résultat préparé ; et
-- le renvoi, par l'unité de commande, de la version mise à jour de l'au moins un résultat,

- en réponse à la détermination par l'unité de commande que la comparaison n'indique pas une exigence de mettre à jour l'au moins un résultat préparé,

-- le renvoi par l'unité de commande de l'au moins un résultat préparé déterminé ;

dans laquelle l'indicateur de mise à jour est défini par $\frac{(1-acc)\cdot t}{c}$, dans laquelle acc est une probabilité que le résultat préparé associé soit valide, t un âge du résultat préparé associé, et c une mesure pour le calcul de ressources de la première plate-forme nécessaires pour préparer la version mise à jour du résultat préparé associé.

**2.** Méthode selon la revendication 1, dans laquelle l'indicateur de mise à jour est défini par $\frac{p\cdot(1-acc)\cdot t}{c}$, dans laquelle p est une fréquence d'accès du résultat préparé associé à partir de l'environnement de base de données et c est une mesure pour le calcul de ressources de la première plate-forme nécessaires pour préparer la version mise à jour du résultat préparé associé.

**3.** Méthode selon l'une quelconque des revendications 1 et 2, comprenant en outre

- l'interrogation, par l'unité de commande, d'un magasin de données de commande sur la base d'informations clés identifiant l'au moins un résultat préparé ;
- la réception, par l'unité de commande à partir du magasin de données de commande, de données de commande spécifiant l'indicateur de mise à jour associé à l'au moins un résultat préparé.

**4.** Méthode selon la revendication 3, dans laquelle la détermination de l'au moins un résultat préparé comprend

- l'interrogation, par l'unité de commande, de la deuxième plate-forme pour l'au moins un résultat préparé déterminé satisfaisant des critères spécifiés par la demande de données ;
- la réception, par l'unité de commande, de l'au moins un résultat préparé à partir de la réserve de résultats préparés de la deuxième plate-forme.

**5.** Méthode selon l'une quelconque des revendications 1 et 2, dans laquelle la détermination de l'au moins un résultat préparé correspondant à la demande de données comprend :

- la retransmission, par l'unité de commande, de la demande de données à la deuxième plate-forme ; et
- la réception, par l'unité de commande à partir de la deuxième plate-forme, de l'au moins un résultat préparé satisfaisant des critères spécifiés par la demande de données ;
dans laquelle la méthode comprend en outre :
- la récupération, par l'unité de commande, de l'indicateur de mise à jour associé au résultat préparé reçu.

**6.** Méthode selon l'une quelconque des revendications 1 à 5, dans laquelle l'au moins un résultat préparé correspondant à la demande de données comprend au moins deux résultats préparés, un premier résultat préparé et un deuxième résultat préparé, la méthode comprenant en outre :

- la détermination, par l'unité de commande, que la comparaison indique une exigence de mettre à jour le premier résultat préparé, mais n'indique pas une exigence de mettre à jour le deuxième résultat préparé,
- la récupération par l'unité de commande d'une version mise à jour du premier résultat préparé à partir de la première plate-forme et la mise à jour du premier résultat préparé dans la réserve de la deuxième plate-forme et de l'indicateur de mise à jour associé sur la base de la version mise à jour récupérée du premier résultat préparé ; et
- le renvoi de la version mise à jour du premier résultat préparé et du deuxième résultat préparé.

**7.** Méthode selon l'une quelconque des revendications 1 à 6, dans laquelle l'adaptation dynamique de la valeur de seuil comprend le maintien d'une boucle de commande à rétroaction entre la première plate-forme et l'unité de commande, dans laquelle une valeur de commande de la boucle de commande à rétroaction est définie par un facteur de charge de la première plate-forme, une valeur de consigne de la boucle de commande à rétroaction est donnée par un facteur de charge cible de la première plate-forme, et une variable d'actionnement de la boucle de commande à rétroaction est donnée par la valeur de seuil.

8. Unité de commande pour la gestion de demandes de données adressées à un environnement de base de données, l'unité de commande étant couplée à une première plate-forme fournissant des résultats originaux à stocker dans une deuxième plate-forme comme des résultats préparés, la deuxième plate-forme conservant une réserve des résultats préparés de manière à être renvoyés pour des demandes de données, dans laquelle chaque résultat préparé conservé par la deuxième plate-forme est associé à un indicateur de mise à jour qui est une mesure que le résultat préparé associé gardé dans la deuxième plate-forme doit être mis à jour, l'unité de commande étant agencée pour :

   - recevoir une demande de données ;
   - déterminer au moins un résultat préparé correspondant à la demande de données ;
   - comparer l'indicateur de mise à jour du résultat préparé déterminé correspondant à la demande de données avec une valeur de seuil, dans laquelle la valeur de seuil est adaptée dynamiquement en fonction de la charge de la première plate-forme ;
   - en réponse à la détermination que la comparaison indique une exigence de mettre à jour le résultat ;

     -- récupérer une version mise à jour de l'au moins un résultat préparé sur la base des données de réponse originales à partir de la première plate-forme ;
     -- mettre à jour le résultat préparé dans la réserve de la deuxième plate-forme et de l'indicateur de mise à jour associé sur la base de la version mise à jour de l'au moins un résultat préparé ; et
     -- renvoyer la version mise à jour de l'au moins un résultat ;

   - en réponse à la détermination que la comparaison n'indique pas une exigence de mettre à jour l'au moins un résultat préparé,

     -- renvoyer l'au moins un résultat préparé déterminé ;

   dans laquelle l'indicateur de mise à jour est défini par $\frac{(1-acc)\cdot t}{c}$, dans laquelle acc est une probabilité que le résultat préparé associé soit valide, t un âge du résultat préparé associé, et c une mesure pour le calcul de ressources de la première plate-forme nécessaires pour préparer la version mise à jour du résultat préparé associé.

9. Unité de commande selon la revendication 8, étant agencée pour effectuer la méthode selon l'une quelconque des revendications 2 à 7.

10. Programme informatique pour l'exécution par une unité de commande pour la gestion de demandes de données adressées à un environnement de base de données, l'unité de commande étant couplée à une première plate-forme fournissant des résultats originaux à stocker dans une deuxième plate-forme comme des résultats préparés, la deuxième plate-forme conservant une réserve des résultats préparés de manière à être renvoyés pour des demandes de données, dans lequel chaque résultat préparé conservé par la deuxième plate-forme est associé à un indicateur de mise à jour qui est une mesure que le résultat préparé associé gardé dans la deuxième plate-forme doit être mis à jour, le programme informatique étant configuré - quand il est exécuté par l'unité de commande - pour amener l'unité de commande à :

   - recevoir une demande de données ;
   - déterminer au moins un résultat préparé correspondant à la demande de données ;
   - comparer l'indicateur de mise à jour du résultat préparé déterminé correspondant à la demande de données avec une valeur de seuil, dans lequel la valeur de seuil est adaptée dynamiquement en fonction de la charge de la première plate-forme ;
   - en réponse à la détermination que la comparaison indique une exigence de mettre à jour le résultat préparé ;

     -- récupérer une version mise à jour de l'au moins un résultat préparé sur la base des données de réponse originales à partir de la première plate-forme ;
     -- mettre à jour le résultat préparé dans la réserve de la deuxième plate-forme et de l'indicateur de mise à jour associé sur la base de la version mise à jour de l'au moins un résultat préparé ; et
     -- renvoyer la version mise à jour de l'au moins un résultat ;

- en réponse à la détermination que la comparaison n'indique pas une exigence de mettre à jour l'au moins un résultat préparé,

-- renvoyer l'au moins un résultat préparé déterminé ;

dans lequel l'indicateur de mise à jour est défini par $\frac{(1-acc)\cdot t}{c}$, dans lequel acc est une probabilité que le résultat préparé associé soit valide, t un âge du résultat préparé associé, et c une mesure pour le calcul de ressources de la première plate-forme nécessaires pour préparer la version mise à jour du résultat préparé associé.

11. Programme informatique selon la revendication 10, étant configuré - quand il est exécuté par l'unité de commande - pour amener l'unité de commande à effectuer la méthode selon l'une quelconque des revendications 2 à 7.

FIG. 1

FIG. 2A

EP 3 128 441 B1

1st
PLATFORM  3

2nd
PLATFORM  4

CONTROL
UNIT  2

6  CLIENT

data request

31  determining
prepared results

32  update indicators
vs. threshold

38  update not
required

return determined
prepared results

30

39

t

**FIG. 2B**

EP 3 128 441 B1

Effect of decreasing probability of validity of prepared results

Fig. 3

EP 3 128 441 B1

**FIG. 4**

EP 3 128 441 B1

EP 3 128 441 B1

| 1st PLATFORM | ~3 | | 2nd PLATFORM | ~4 | | CONTROL DATA STORE | ~10 | | CONTROL UNIT | ~2 | | 6 | CLIENT |

data request

determine prepared
results ID and request
update indicators values
31A

31B
update indicator values

31C — calculate update
indicator

32 — update indicators
vs. threshold

33 — update required

30

34 — Retrieve update
prepared results

updated prepared results

35

update prepared
results

36A

update update
indicator values

return updated
prepared results

t

36B

37

**FIG. 5A**

FIG. 5B

EP 3 128 441 B1

EP 3 128 441 B1

```
┌──────────┐        ┌──────────┐   ┌──────────────┐   ┌──────────┐              ┌──────────┐
│   1st    │        │   2nd    │   │  CONTROL     │   │ CONTROL  │         6 ┐  │  CLIENT  │
│ PLATFORM │╌3       │ PLATFORM │╌4  │ DATA STORE   │╌10 │   UNIT   │╌2         └─│          │
└────┬─────┘        └────┬─────┘   └──────┬───────┘   └────┬─────┘              └────┬─────┘
     │                   │                │                │                         │
     │                   │                │                │        ┌──────────────┐ │
     │                   │                │                │        │ data request │ │
     │                   │                │                │        └──────────────┘ │
     │                   │                │      ┌────────────────────┐              │
     │                   │                │      │ retrieve prepared results │◄──────┘
     │                   │                │      └────────────────────┘
     │                   │◄───────────────┼───────────────────╮ 31A
     │              ┌────────────────┐    │
     │              │ prepared results │───┼────────────────────►
     │              └────────────────┘    │              ╮31B
     │                   │        ┌────────────────────┐
     │                   │        │ retrieve update indicator │
     │                   │        │       values        │
     │                   │        └────────────────────┘
     │                   │◄──────────────────╮ 31C
     │                   │     ┌──────────────────┐
     │                   │     │ update indicator values │──────►
     │                   │     └──────────────────┘  ╮31D
```

retrieve prepared results

31A

prepared results

31B

retrieve update indicator values

31C

update indicator values

31D

31E — calculate update indicator

32 — update indicators vs. threshold

33 — update required for portion of prepared results

38 — update not required for remaining prepared results

t

**FIG. 6A**

30

EP 3 128 441 B1

| 1st PLATFORM ⌇3 | 2nd PLATFORM ⌇4 | CONTROL DATA STORE ⌇10 | CONTROL UNIT ⌇2 | 6 ⌇ CLIENT |

retrieve updated version of portion of prepared results

34

retrieve content of remaining prepared results

40A

content of remaining prepared results

return prepared results

40B

39

portion of updated prepared results

35

update prepared results

36A

update update indicator values

return prepared results

36B

post-processing prepared results

41

37

t

**FIG. 6B**

**FIG. 7**

2

CONTROL UNIT

CPU 81

Instructions

90

Main Memory

OS

90

Instructions

90

83

Cursor control

89

Network I/F 83

84

Static Memory 83

Disk drive 83

Video display 87

Alpha-numeric input 88

**FIG. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0133472 A
- WO 0225557 A
- WO 9922315 A
- US 20090204753 A1
- EP 2013002390 W
- EP 2541473 A1
- WO 2014026753 A1

**Non-patent literature cited in the description**

- **J. CHO.** *Synchronizing a database to Improve Freshness*